(19) Europäisches Patentamt / European Patent Office / Office européen des brevets

(11) **EP 2 595 291 B1**

(12) **FASCICULE DE BREVET EUROPEEN**

(45) Date de publication et mention de la délivrance du brevet:
**08.04.2020 Bulletin 2020/15**

(51) Int Cl.:
***H02M 1/15*** *(2006.01)*

(21) Numéro de dépôt: **12190725.7**

(22) Date de dépôt: **31.10.2012**

(54) **Convertisseur de puissance doté de plusieurs sources de courant commandées connectées en parallèle**

Leistungswandler, der mit mehreren Stromquellen ausgestattet ist, die parallel gesteuert und verbunden sind

Power converter equipped with a plurality of controlled current sources connected in parallel

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.11.2011 FR 1160350**

(43) Date de publication de la demande:
**22.05.2013 Bulletin 2013/21**

(73) Titulaire: **Schneider Toshiba Inverter Europe SAS 27120 Pacy sur Eure (FR)**

(72) Inventeurs:
- **Boulharts, Hocine**
  **78510 Triel sur Seine (FR)**
- **Vang, Heu**
  **78955 Carrières sous Poissy (FR)**
- **Devos, Thomas**
  **78955 Carrières sous Poissy (FR)**
- **Sepulchre, Rodolphe**
  **14122 Neupré (BE)**

(74) Mandataire: **Dufresne, Thierry et al Schneider Electric Industries SAS Service Propriété Industrielle 35 rue Joseph Monier - CS 30323 92506 Rueil-Malmaison Cedex (FR)**

(56) Documents cités:

- COSMIN GALEA ET AL: "New topology of electronic smoothing inductor used in three phase electric drives", ELECTRICAL POWER QUALITY AND UTILISATION (EPQU), 2011 11TH INTERNATIONAL CONFERENCE ON, IEEE, 17 octobre 2011 (2011-10-17), pages 1-6, XP032092229, DOI: 10.1109/EPQU.2011.6128837 ISBN: 978-1-4673-0379-8
- MINO K ET AL: "Ultra compact three-phase rectifier with electronic smoothing inductor", APPLIED POWER ELECTRONICS CONFERENCE AND EXPOSITION, 2005. APEC 2005. TWENTIETH ANNUAL IEEE AUSTIN, TX, USA 6-10 MARCH 2005, PISCATAWAY, NJ, USA,IEEE, US, vol. 1, 6 mars 2005 (2005-03-06), pages 522-528, XP010809841, DOI: 10.1109/APEC.2005.1452989 ISBN: 978-0-7803-8975-5
- ERTL H ET AL: "A Constant Output Current Three-Phase Diode Bridge Rectifier Employing a Novel Electronic Smoothing Inductor", IEEE TRANSACTIONS ON INDUSTRIAL ELECTRONICS, IEEE SERVICE CENTER, PISCATAWAY, NJ, USA, vol. 52, no. 2, 1 avril 2005 (2005-04-01), pages 454-461, XP011129546, ISSN: 0278-0046, DOI: 10.1109/TIE.2005.843910
- YURI PANOV ET AL: "Loop gain measurement of paralleled dc-dc converters with average-current-sharing control", APPLIED POWER ELECTRONICS CONFERENCE AND EXPOSITION, 2008. APEC 2008. TWENTY-THIRD ANNUAL IEEE, IEEE, PISCATAWAY, NJ, USA, 24 February 2008 (2008-02-24), pages 1048-1053, XP031253377, ISBN: 978-1-4244-1873-2

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**Domaine technique de l'invention**

La présente invention se rapporte à un convertisseur de puissance doté de plusieurs sources de courant commandées connectées en parallèle.

**Etat de la technique**

L'emploi d'une source de courant commandée dans un convertisseur de puissance est décrit dans les publications suivantes :

- ERTL H ET AL "A constant Output Current Three Phase Diode Bridge Rectifyer Employing a Novel Electronic Smoothing Inductor" - Vol. 52, n°2, 01 avril 2005 - pages 454-461, XP011129546 - ISSN:0278-0046, DOI : DOI : 10.1109/TIE.2005.843910,

- SALMON J ET AL "Improving the Opération of 3-Phase Diode Rectifiers using an asymmetrical half-bridge DC-link active filter"-vol. Conf. 35, 08 octobre 2000 - pages 2115-2122, XP001042610-DOI : DOI : 10.1109/IAS.2000.883118-ISBN:978-0-7803-6402-8.

- Cosmin Galea et Al "New topology of electronic smoothing inductor used in three phase electric drives"- ELECTRICAL POWER QUALITY AND UTILISATION (EPQU), 2011 11TH International Conférence On, IEEE - 17/10/2011, pages 1-6. DOI : 10.1109/EPQU.2011.6128837 - ISBN : 978-1-4673-0379-8.

- MINO K et Al "Ultra compact three phase rectifier with electronic smoothing inductor", - APPLIED POWER ELECTRONICS CONFERENCE AND EXPOSITION, 2005. APEC 2005. TWENTIETH ANNUAL IEEE AUSTIN, TX, USA 6-10 MARCH 2005, PISCATAWAY, NJ, USA, IEEE, US, vol. 1, 6 mars 2005, pages 522-528, XP010809841. DOI : 10.1109/APEC.2005.1452989 - ISBN 978-0-7803-8975-5.

Dans ces publications, la source de courant commandée est formée d'une inductance et d'une source de tension variable connectées en série sur le bus continu d'alimentation du convertisseur de puissance. La source de courant commandée permet de contrôler la forme du courant en sortie de l'étage redresseur, dénommé ci-après courant redresseur, et ainsi d'agir sur les harmoniques du courant d'entrée du convertisseur, l'importance de ces harmoniques étant représentée par deux indicateurs dénommés THDi ("Total Harmonic Distortion of Current") et PWHD ("Partial Weighted Harmonic Distortion").

Le THDi correspond au taux de distorsion harmonique en courant et représente donc la valeur efficace des harmoniques rapportée à la valeur efficace du courant fondamental. Le PWHD introduit pour sa part une pondération donnant davantage de poids aux harmoniques à haute fréquence, plus particulièrement ceux des rangs 14 à 40.

Cependant, la puissance d'une source de courant commandée, telle que décrite dans les publications référencées ci-dessus, est particulièrement limitée. Il n'est pas possible de l'employer lorsque le courant redresseur est trop fort.

Le document de YURI PANOVOV ET AL: "Loop gain measurement of paralleled dc-dc converters with average-current-sharing control", APPLIED POWER ELECTRONICS CONFERENCE AND EXPOSITION, 2008. APEC 2008. TWENTY-THIRD ANNUAL IEEE, IEEE, PISCATAWAY, NJ, USA, 24 février 2008 (2008-02-24), pages 1048-1053, ISBN: 978-1-4244-1873-2 décrit une manière de repartir des courants de deux convertisseurs connectés en parallèle.

Le but de l'invention est de proposer un convertisseur de puissance qui permet un contrôle de la forme du courant redresseur, même si celui-ci est particulièrement fort.

**Exposé de l'invention**

Ce but est atteint par un convertisseur de puissance comportant :

- un étage redresseur connecté à plusieurs phases d'un réseau délivrant un courant d'entrée,
- un bus continu d'alimentation connecté à l'étage redresseur, comportant une première ligne d'alimentation et une deuxième ligne d'alimentation et sur lequel circule un courant redressé par l'étage redresseur et dit courant redresseur,
- un condensateur de bus connecté à la première ligne d'alimentation et à la deuxième ligne d'alimentation,
- une première source de courant commandée connectée en série sur la première ligne d'alimentation, en amont du condensateur de bus, ladite source de courant commandée comportant une première source de tension variable,

- une deuxième source de courant commandée connectée en parallèle de la première source de courant commandée, ladite deuxième source de courant commandée comportant une deuxième source de tension variable,
- une unité de commande de la première source de courant commandée et de la deuxième source de courant commandée, l'unité de commande étant agencée pour répartir le courant redresseur en un premier courant circulant dans la première source de courant commandée et en un deuxième courant circulant dans la deuxième source de courant commandée, agencée pour mettre en forme le courant redresseur et pour réguler la tension aux bornes de la première source de tension variable et la tension aux bornes de la deuxième source de tension variable.

Selon une particularité, la première source de courant commandée et la deuxième source de courant commandée sont identiques entre elles.

Selon une autre particularité, la première source de courant commandée comporte une première inductance connectée en série avec la première source de tension variable.

Selon une autre particularité, la deuxième source de courant commandée comporte une deuxième inductance connectée en série avec la deuxième source de tension variable.

Selon une autre particularité, la première inductance et la deuxième inductance sont couplées sur un même noyau magnétique.

Selon une autre particularité, la première source de tension variable et la deuxième source de tension variable comportent chacune un convertisseur électronique comportant un premier bras de commutation, un deuxième bras de commutation et un condensateur connectés en parallèle, chaque bras de commutation comportant au moins un interrupteur électronique.

Selon une autre particularité, l'unité de commande comporte des moyens de détermination d'une tension de commande à appliquer à chaque source de courant commandée, la tension de commande ($v_k$) étant déterminée à partir de la relation suivante :

$$v_k = u_k V_{ek} = u_k^* V_{ek}^* + PI\left( I^* V_{ek} - V_{ek}^* \sum_{k=1}^{n} I_k \right)$$

Dans laquelle :

- $I^*$ représente la référence du courant redresseur,

- $u_k^*$ représente la référence de rapport cyclique pour la source de courant commandée $k$,

- $V_{ek}^*$ représente la référence de tension aux bornes du condensateur de la source de courant commandée $k$,

- $PI$ représente un régulateur à action proportionnelle intégrale.

**Brève description des figures**

D'autres caractéristiques et avantages vont apparaître dans la description détaillée qui suit, faite en regard des dessins annexés dans lesquels :

- la figure 1 représente le convertisseur de puissance de l'invention selon un premier mode de réalisation,

- la figure 2 représente des courbes de simulation obtenues pour deux cellules identiques connectées en parallèle.

**Description détaillée d'au moins un mode de réalisation**

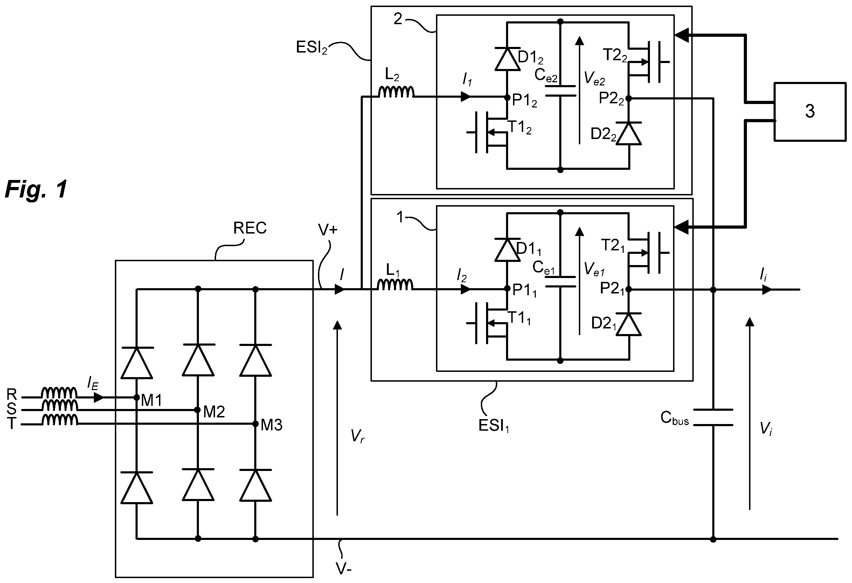

En référence à la figure 1, de manière connue, un convertisseur de puissance comporte un étage redresseur REC et un bus continu d'alimentation. Différentes configurations de convertisseur de puissance sont possibles. L'étage redresseur REC employé peut être de nature classique avec un pont de diodes ou être actif en étant doté de bras de commutation commandés.

Dans la suite de la description et comme représenté sur la figure 1, on s'intéressera en particulier à un convertisseur de puissance doté d'un étage redresseur REC à pont de diodes non commandé.

En référence à la figure 1, l'étage redresseur REC est connecté au réseau, par exemple via des inductances AC sur trois phases d'entrée R, S, T. Sur cette figure 1, l'étage redresseur REC est composé d'un pont de diodes non commandé qui permet de redresser la tension alternative fournie par le réseau et d'appliquer une tension continue sur le bus continu d'alimentation. Plus précisément, l'étage redresseur REC comporte plusieurs bras composés chacun de deux diodes en série, chaque bras étant connecté à une phase d'entrée R, S, T par le point milieu M1, M2, M3 situé entre les deux diodes.

Le bus continu d'alimentation de puissance est connecté en aval de l'étage redresseur 1. Il comporte une première ligne d'alimentation V+ à potentiel positif et une deuxième ligne d'alimentation V- à potentiel négatif. Un condensateur de bus Cbus est connecté aux deux lignes d'alimentation du bus et permet de maintenir la tension du bus $V_i$ à une valeur constante.

Le premier objectif de l'invention est de pouvoir contrôler le profil du courant circulant sur le bus continu d'alimentation, en sortie de l'étage redresseur, ci-après désigné courant redresseur $I$, en vue d'influer sur le profil du courant d'entrée $I_E$ du convertisseur de puissance, par exemple, pour limiter ses harmoniques. Le deuxième objectif de l'invention consiste à contrôler le profil du courant redresseur $I$ même si celui-ci est relativement élevé.

Pour remplir ces objectifs, le convertisseur de puissance comporte une première source de courant commandée qui est connectée en série sur la première ligne d'alimentation V+ ou sur la deuxième ligne d'alimentation V- du convertisseur, en amont du condensateur de bus $C_{bus}$, et au moins une deuxième source de courant commandée connectée en parallèle de la première source de courant commandée.

La mise en parallèle de plusieurs sources de courant commandées est une solution pour augmenter la puissance du convertisseur de puissance. De plus, la juxtaposition de plusieurs sources de courant commandées en parallèle permet de choisir des composants de faible calibre en tension et en courant.

Ci-dessous, pour alléger la rédaction de la description, chaque source de courant commandée sera dénommée cellule ($ESI_k$).

Selon l'invention, les cellules $ESI_k$ du convertisseur peuvent être toutes identiques ou peuvent présenter des différences, notamment dans la tenue en tension et en courant des composants employés. Chaque cellule $ESI_k$ pourrait ainsi être apte à faire passer un niveau de courant différent.

Les cellules peuvent se présenter chacune sous la forme d'un module indépendant qui peut être ajouté au convertisseur ou retiré aisément de celui-ci en fonction de la puissance du convertisseur.

Dans la suite de la description, nous nous intéressons à un convertisseur de puissance qui comporte deux cellules $ESI_1$, $ESI_2$ connectées en parallèle. Bien entendu, il faut comprendre que ce nombre n'est pas limitatif.

En référence à la figure 1, la première cellule $ESI_1$ comporte :

- une inductance $L_1$ de faible valeur,

- une source de tension variable commandée prenant la forme d'un convertisseur électronique 1 composé de deux bras de commutation distincts en parallèle et d'un condensateur $C_{e1}$ connecté en parallèle des deux bras de commutation.

En référence à la figure 1, la deuxième cellule $ESI_2$ comporte :

- une inductance $L_2$ de faible valeur,

- une source de tension variable commandée prenant la forme d'un convertisseur électronique 2 composé de deux bras de commutation distincts en parallèle et d'un condensateur $C_{e2}$ connecté en parallèle des deux bras de commutation.

Selon l'invention, il est également possible de prévoir de coupler les deux inductances $L_1$, $L_2$ des deux cellules sur un même noyau magnétique.

Dans la suite de la description, pour des raisons de simplification, nous décrivons seulement la première cellule $ESI_1$. Il faut comprendre que cette description s'applique de la même manière à la deuxième cellule $ESI_2$.

Si l'étage redresseur REC du convertisseur de puissance est non-réversible, comme par exemple un pont de diodes, les bras de commutation du convertisseur électronique 1 employé peuvent être unidirectionnels en courant. En revanche, si l'étage redresseur REC était réversible, c'est-à-dire composé de bras de commutation commandés, les bras de commutation du convertisseur électronique devraient être bidirectionnels en courant pour autoriser la régénération d'énergie sur le réseau.

Différentes topologies peuvent être employées pour le convertisseur électronique 1 selon le type d'étage redresseur REC employé, mais aussi selon la taille de l'inductance $L_1$ qui lui est connectée.

Pour un étage redresseur REC non-réversible, les deux bras de commutation du convertisseur électronique 1 de la première cellule $ESI_1$, (respectivement 2 pour la deuxième cellule $ESI_2$) comportent par exemple chacun un interrupteur électronique $T1_1$, $T1_2$ (respectivement $T2_1$, $T2_2$) connecté en série avec une diode $D1_1$, $D1_2$ (respectivement

D2$_1$, D2$_2$). Chaque bras de commutation comporte un point milieu de connexion P1$_1$, P1$_2$ (respectivement P2$_1$, P2$_2$) situé entre son interrupteur électronique T1$_1$, T1$_2$ (respectivement T2$_1$, T2$_2$) et sa diode D1$_1$, D1$_2$ (respectivement D2$_1$, D2$_2$). Le point milieu de connexion P1$_1$ (respectivement P2$_1$) du premier bras de commutation est connecté à l'inductance L$_1$ (respectivement L$_2$) et le point milieu de connexion P1$_2$ (respectivement P2$_2$) du deuxième bras de commutation est connecté au condensateur de bus C$_{bus}$. Sur un bras de commutation du convertisseur électronique 1 (respectivement 2), l'agencement en série de l'interrupteur électronique et de la diode est inversé par rapport à celui de l'autre bras de commutation. Si le convertisseur de puissance emploie un étage redresseur réversible, chaque bras de commutation du convertisseur électronique 1 (respectivement 2) comporte par exemple deux interrupteurs électroniques (configuration non représentée).

Les interrupteurs électroniques T1$_1$, T1$_2$, T2$_1$, T2$_2$ employés dans chaque convertisseur électronique 1, 2 sont par exemple des transistors de type MOSFET, commandés par une unité de commande 3 commune à toutes les cellules. L'unité de commande emploie par exemple une commande MLI (Modulation de largeur d'impulsion).

Le convertisseur électronique 1, 2 de chaque cellule ESI$_1$, ESI$_2$ se comporte ainsi comme une source de tension variable commandée tenant compte de la tension aux bornes de son condensateur C$_{e1}$, C$_{e2}$.

Selon l'invention, la mise en parallèle de plusieurs cellules nécessite un contrôle adapté mis en œuvre dans l'unité de commande 3. Le contrôle mis en œuvre doit permettre de répartir le courant redresseur $I$ dans chaque cellule ESI$_1$, ESI$_2$, de réguler la tension aux bornes de chaque convertisseur électronique 1, 2, tout en permettant la mise en forme du courant redresseur, notamment pour que le courant d'entrée $I_E$ présente peu d'harmoniques et que celui-ci réponde à certaines contraintes sur son THDi et son PWHD. Si le convertisseur de puissance utilise par exemple deux cellules identiques, le contrôle mis en œuvre par l'unité de commande permet de répartir équitablement le courant redresseur dans chaque cellule.

Un exemple de contrôle adapté, décrit ci-dessous, est basé sur la théorie de la passivité, selon laquelle la puissance en entrée des cellules est égale à la puissance en sortie des cellules.

Pour simplifier la présentation du contrôle, nous allons considérer que les deux cellules ESI$_1$, ESI$_2$ sont commandées dans le but d'obtenir un courant redresseur $I$ constant, sans mise en forme ("shaping") particulière.

Le système s'écrit sous la forme suivante :

$$C_i \dot{V}_i = I - I_i$$

$$L_1 \dot{I}_1 = V_r - V_i - v_1$$

$$L_2 \dot{I}_2 = V_r - V_i - v_2$$

$$\dot{E}_1 = I_1 v_1$$

$$\dot{E}_2 = I_2 v_2$$

$$I = I_1 + I_2$$

$$v_1 = u_1 V_{e1}$$

$$v_2 = u_2 V_{e2}$$

Avec :

- $I$ qui représente le courant redresseur,
- $I_1$ qui représente le courant dans la cellule ESI$_1$,
- $I_2$ qui représente le courant dans la cellule ESI$_2$,
- $V_i$ qui représente la tension du bus continu d'alimentation,
- $V_r$ qui représente la tension en sortie du pont redresseur,

- $E_1$ qui représente l'énergie dans la cellule $ESI_1$ (=$1/2*C_{e1}*V_{e1}^2$),
- $E_2$ qui représente l'énergie dans la cellule $ESI_2$ (=$1/2*C_{e2}*V_{e2}^2$),
- $v_1$ qui représente la tension de commande de la cellule $ESI_1$,
- $v_2$ qui représente la tension de commande de la cellule $ESI_2$,
- $u_1$ qui représente le rapport cyclique de commande de la cellule $ESI_1$,
- $u_2$ qui représente le rapport cyclique de commande de la cellule $ESI_2$,
- $V_{e1}$ qui représente la tension aux bornes du condensateur de la cellule $ESI_1$,
- $V_{e2}$ qui représente la tension aux bornes du condensateur de la cellule $ESI_2$.

Les équations dynamiques du système peuvent être généralisées pour une cellule $k$ sous la forme suivante :

$$C_i \dot{V}_i = I - I_i$$

$$L_k \dot{I}_k = V_r - V_i - v_k$$

$$C_{ek} \dot{V}_{ek} = u_k I_k$$

$$I = \sum_{k=1}^{n} I_k$$

$$v_k = u_k V_{ek}$$

Dans lesquelles :

- $C_i$ représente la capacité du condensateur de bus $C_{bus}$,

- $V_i$ représente la tension du bus continu d'alimentation,

- $I$ représente le courant redresseur,

- $I_i$ représente le courant circulant sur le bus continu d'alimentation, en aval du condensateur de bus,

- $L_k$ représente l'inductance de la cellule $k$,

- $I_k$ représente le courant dans la cellule $k$,

- $V_r$ représente la tension en sortie du pont redresseur,

- $v_k$ représente la tension de commande de la cellule $k$,

- $C_{ek}$ représente la capacité du condensateur de la cellule $k$,

- $V_{ek}$ représente la tension aux bornes du condensateur de la cellule $k$,

- $u_k$ représente le rapport cyclique de commande la cellule $k$.

L'hamiltonien $H$ de ce système s'écrit sous la forme :

$$H = \frac{1}{2} \sum_{k=1}^{n} \left( \frac{\varphi_k^2}{L_k} + \frac{q_{ek}^2}{C_{ek}} \right) + \frac{1}{2} \frac{q_i^2}{C_i}$$

$$\varphi_k = L_k I_k$$

$$q_{ek} = C_{ek} V_{ek}$$

$$q_i = C_i V_i$$

Avec :

- $\varphi_k$ qui représente le flux dans l'inductance $L_k$ de la cellule $k$,
- $q_{ek}$ qui représente la charge du condensateur de la cellule $k$,
- $q_i$ qui représente la charge du condensateur de bus.

Le modèle vérifie la balance d'énergie suivante :

$$\dot{H} = I V_r - V_i I_i$$

Une particularité de cette structure est la propriété de stabilité incrémentale. Le linéarisé tangent du modèle incrémental est :

$$\delta \tilde{x} = \begin{pmatrix} \delta\dot{\varphi}_k \\ \delta\dot{q}_{ek} \\ \delta\dot{q}_i \end{pmatrix} = \begin{pmatrix} 0 & -u_k^* & -1 \\ u_k^* & 0 & 0 \\ 1 & 0 & 0 \end{pmatrix} \begin{pmatrix} \dfrac{\partial \delta H}{\partial \varphi_k} \\ \dfrac{\partial \delta H}{\partial q_k} \\ \dfrac{\partial \delta H}{\partial q_i} \end{pmatrix} + \begin{pmatrix} -V_{ek}^* \\ I_k^* \\ 0 \end{pmatrix} \delta u$$

$$\delta y = b^T \frac{\partial \delta H}{\partial \delta x}$$

Le système linéarisé est Hamiltonien (et donc passif), considérant la sortie avec $b^T = (-V_{ek}^*, I_k^*, 0)$.

Cela signifie qu'un correcteur proportionnel-intégral de la sortie $\delta y$ est possible et stabilise le système le long de toute trajectoire contrôlable du linéarisé tangent.

Il est ainsi possible de définir la tension de commande $v_k$ à appliquer à chaque cellule $k$, permettant une stabilisation locale du système autour d'une trajectoire de référence :

$$v_k = u_k V_{ek} = u_k^* V_{ek}^* + PI \left( I^* V_{ek} - V_{ek}^* \sum_{k=1}^{n} I_k \right)$$

Avec :

- $I^*$ qui représente la référence du courant redresseur,

- $u_k^*$ qui représente la référence de rapport cyclique pour la cellule $k$,

- $V_{ek}^*$ qui représente la référence de tension aux bornes du condensateur de la cellule $k$,

- *PI* qui représente un régulateur à action proportionnelle intégrale appliqué au terme présenté entre parenthèses.

Cette expression montre que l'application d'une tension de commande $v_k$ déterminée à la cellule $k$ permet de tenir compte de la référence $I^*$ du courant redresseur, de la référence $V_{ek}^*$ de tension aux bornes du condensateur $C_{ek}$ de la cellule $k$ et de la référence $u_k^*$ de rapport cyclique appliquée à la cellule $k$.

Pour appliquer à la cellule $k$, la tension de commande $v_k$ définie ci-dessus, il est nécessaire de déterminer les différentes références $I^*$, $I_k^*$, $V_i^*$, $V_{ek}^*$. En considérant par exemple une référence de courant redresseur $I^*$ constante et une répartition équitable du courant redresseur $I$ dans les différentes cellules $ESI_k$, ces différentes références doivent alors suivre les équations suivantes :

$$I_k^*(t) = \frac{1}{n} I^*(t) = \frac{1}{n} \overline{I}_i$$

$$V_i^*(t) = \overline{V}_r$$

$$\frac{1}{2} C_e V_{ek}^{*\,2}(t) = \frac{1}{2} C_e \overline{V}_{ek}^{*\,2}(t) + \frac{1}{n} \int \left( V_r(\tau) - V_i^*(\tau) \right) I^*(\tau) d\tau$$

$$u_k^*(t) = \frac{1}{V_{ek}^*(t)} \left( V_r(t) - V_i^*(t) \right)$$

Avec :

- $\overline{V}r$ qui représente, en valeur moyenne, la tension en sortie du pont redresseur,

- $\overline{V}^*_{ek}$ qui représente, en valeur moyenne, la tension aux bornes du condensateur de la cellule $k$.

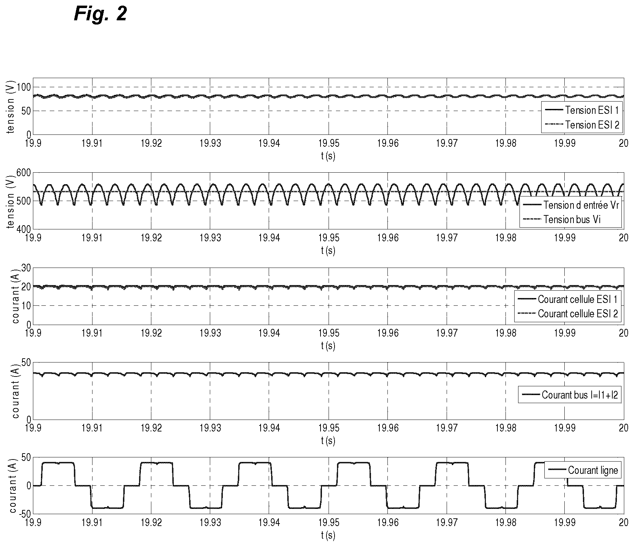

La figure 2 montre des courbes de simulation pour un convertisseur de puissance qui comporte deux cellules $ESI_1$, $ESI_2$ identiques connectées en parallèle et qui est alimenté par une tension d'entrée de 400 Volts.

Comme représenté sur le quatrième diagramme de la figure 2, la trajectoire de référence du courant redresseur $I$ suit une valeur constante. Sur le troisième diagramme, on peut voir que le courant $I_1$ circulant dans la première cellule $ESI_1$ est égal au courant $I_2$ circulant dans la deuxième cellule $ESI_2$ (les deux courbes sont confondues). Sur le premier diagramme, on peut voir que la tension $V_{e1}$ aux bornes du condensateur de la première cellule $ESI_1$ et la tension $V_{e2}$ aux bornes du condensateur de la deuxième cellule $ESI_2$ sont égales entre elles (les deux courbes sont confondues) et régulées chacune à 80 Volts. Le cinquième diagramme montre le courant d'entrée $I_E$, présentant une valeur moyenne constante.

Selon les ordres de commande appliqués aux cellules, une commande entrelacée des cellules peut être effectuée.

## Revendications

**1.** Convertisseur de puissance comportant :

- un étage redresseur (REC) connecté à plusieurs phases (R, S, T) d'un réseau délivrant un courant d'entrée ($I_E$),
- un bus continu d'alimentation connecté à l'étage redresseur (REC), comportant une première ligne d'alimentation (V+) et une deuxième ligne d'alimentation (V-) et sur lequel circule un courant redressé par l'étage redresseur et dit courant redresseur ($I$),
- un condensateur de bus (Cbus) connecté à la première ligne d'alimentation via une première source de courant commandée et à la deuxième ligne d'alimentation, ladite source de courant commandée comportant une première source de tension variable,

**caractérisé en ce qu'**il comporte :

- une deuxième source de courant commandée connectée en parallèle de la première source de courant commandée, ladite deuxième source de courant commandée comportant une deuxième source de tension variable,

- une unité de commande (3) de la première source de courant commandée et de la deuxième source de courant commandée, l'unité de commande (3) étant agencée pour répartir le courant redresseur ($I$) en un premier courant circulant ($I_1$) dans la première source de courant commandée et en un deuxième courant ($I_2$) circulant dans la deuxième source de courant commandée, agencée pour mettre en forme le courant redresseur ($I$) et pour réguler la tension ($V_{e1}$, $V_{e2}$) aux bornes de la première source de tension variable et la tension aux bornes de la deuxième source de tension variable et **en ce que** :

- l'unité de commande comporte des moyens de détermination d'une tension de commande à appliquer à chaque source de courant commandée $k$, la tension de commande ($v_k$) étant déterminée à partir de la relation suivante :

$$v_k = u_k V_{ek} = u_k^* V_{ek}^* + PI\left( I^* V_{ek} - V_{ek}^* \sum_{k=1}^{n} I_k \right)$$

Dans laquelle :

- $u_k$ représente le rapport cyclique de commande de la source de courant commandée $k$,
- $V_{ek}$ représente la tension aux bornes du condensateur de la source de courant commandée $k$,
- $I^*$ représente la référence du courant redresseur,
- $u_k^*$ représente la référence de rapport cyclique pour la source de courant commandée $k$,
- $V_{ek}^*$ représente la référence de tension aux bornes du condensateur de la source de courant commandée $k$,
- $PI$ représente un régulateur à action proportionnelle intégrale,
- n représente le nombre des sources de courant en paralelle,
- Ik représente le courant dans la source de courant k.

2. Convertisseur selon la revendication 1, **caractérisé en ce que** la première source de courant commandée et la deuxième source de courant commandée sont identiques entre elles.

3. Convertisseur selon la revendication 1 ou 2, **caractérisé en ce que** la première source de courant commandée comporte une première inductance ($L_1$) connectée en série avec la première source de tension variable.

4. Convertisseur selon la revendication 3, **caractérisé en ce que** la deuxième source de courant commandée comporte une deuxième inductance ($L_2$) connectée en série avec la deuxième source de tension variable.

5. Convertisseur de puissance selon la revendication 4, **caractérisé en ce que** la première inductance ($L_1$) et la deuxième inductance ($L_2$) sont couplées sur un même noyau magnétique.

6. Convertisseur selon la revendication 4, **caractérisé en ce que** la première source de tension variable et la deuxième source de tension variable comportent chacune un convertisseur électronique (1, 2) comportant un premier bras de commutation, un deuxième bras de commutation et un condensateur ($C_{e1}$, $C_{e2}$) connectés en parallèle, chaque bras de commutation comportant au moins un interrupteur électronique ($T1_1$, $T1_2$, $T2_1$, $T2_2$).


**Patentansprüche**

1. Leistungswandler, der Folgendes umfasst:

- eine Gleichrichterstufe (REC), die mit mehreren Phasen (R, S, T) eines Netzwerks verbunden ist, die einen Eingangsstrom ($I_E$) liefern,
- einen Gleichstromversorgungsbus, der mit der Gleichrichterstufe (REC) verbunden ist und der eine erste Versorgungsleitung (V+) und eine zweite Versorgungsleitung (V-) umfasst und durch den ein durch die Gleichrichterstufe gleichgerichteter Strom fließt, der Gleichrichterstrom ($I$) genannt wird,
- einen Buskondensator (Cbus), der mit der ersten Versorgungsleitung über eine erste gesteuerte Stromquelle und mit der zweiten Versorgungsleitung verbunden ist,

- wobei die gesteuerte Stromquelle eine erste variable Spannungsquelle umfasst,

**dadurch gekennzeichnet, dass** er Folgendes beinhaltet:

- eine zweite gesteuerte Stromquelle, die mit der ersten gesteuerten Stromquelle parallel verbunden ist, wobei die zweite gesteuerte Stromquelle eine zweite variable Spannungsquelle umfasst,
- eine Steuereinheit (3) der ersten gesteuerten Stromquelle und der zweiten gesteuerten Stromquelle, wobei die Steuereinheit (3) so angeordnet ist, dass sie den Gleichrichterstrom ($I$) in einen ersten Strom ($I_1$), der durch die erste gesteuerte Stromquelle fließt, und in einen zweiten Strom ($I_2$), der durch die zweite gesteuerte Stromquelle fließt, aufteilt, und so angeordnet ist, dass sie den Gleichrichterstrom ($I$) formt und die Spannung ($V_{e1}$, $V_{e2}$) an den Klemmen der ersten variablen Spannungsquelle und die Spannung an den Klemmen der zweiten variablen Spannungsquelle regelt, und wobei:
- die Steuereinheit Mittel zur Bestimmung einer an jede gesteuerte Stromquelle $k$ anzulegenden Steuerspannung umfasst, wobei die Steuerspannung ($V_k$) anhand der folgenden Beziehung bestimmt wird:

$$v_k = u_k V_{ek} = u_k^* V_{ek}^* + PI\left(I^* V_{ek} - V_{ek}^* \sum_{k=1}^{n} I_k\right)$$

Wobei:

- $u_k$ das Steuertastverhältnis der gesteuerten Stromquelle $k$ darstellt,
- $V_{ek}$ die Spannung an den Klemmen des Kondensators der gesteuerten Stromquelle $k$ darstellt,
- $I^*$ die Referenz des Gleichrichterstroms darstellt,
- $u_k^*$ die Referenz des Tastverhältnisses für die gesteuerte Stromquelle $k$ darstellt,
- $V_{ek}^*$ die Spannungsreferenz an den Klemmen des Kondensators der gesteuerten Stromquelle $k$ darstellt,
- $PI$ einen Proportional-Integral-Regler darstellt,
- n die Anzahl der parallelen Stromquellen darstellt,
- Ik den Strom in der Stromquelle k darstellt.

2. Wandler nach Anspruch 1, **dadurch gekennzeichnet, dass** die erste gesteuerte Stromquelle und die zweite gesteuerte Stromquelle untereinander identisch sind.

3. Wandler nach Anspruch 1 oder 2, **dadurch gekennzeichnet, dass** die erste gesteuerte Stromquelle eine erste Induktivität ($L_1$) umfasst, die mit der ersten variablen Spannungsquelle in Reihe verbunden ist.

4. Wandler nach Anspruch 3, **dadurch gekennzeichnet, dass** die zweite gesteuerte Stromquelle eine zweite Induktivität ($L_2$) umfasst, die mit der zweiten variablen Spannungsquelle in Reihe verbunden ist.

5. Leistungswandler nach Anspruch 4, **dadurch gekennzeichnet, dass** die erste Induktivität ($L_1$) und die zweite Induktivität ($L_2$) mit einem gleichen magnetischen Kern gekoppelt sind.

6. Wandler nach Anspruch 4, **dadurch gekennzeichnet, dass** die erste variable Spannungsquelle und die zweite variable Spannungsquelle jeweils einen elektronischen Wandler (1, 2) umfassen, der einen ersten Schaltarm, einen zweiten Schaltarm und einen Kondensator ($C_{e1}$, $C_{e2}$) umfasst, die parallel verbunden sind, wobei jeder Schaltarm mindestens einen elektronischen Schalter ($T1_1$, $T1_2$, $T2_1$, $T2_2$) umfasst.

**Claims**

1. Power converter comprising:

- a rectifier stage (REC) connected to a plurality of phases (R, S, T) of a network supplying an input current ($I_E$),
- a DC power supply bus which is connected to the rectifier stage (REC), comprising a first power supply line (V+) and a second power supply line (V-), and over which a current rectified by the rectifier stage, and called rectifier current ($I$), flows,
- a bus capacitor ($C_{bus}$) connected to the first power supply line via a first controlled current source, and to the second power supply line,
- said control current source comprising a first variable voltage source,

**characterised in that** it comprises:

- a second controlled current source connected in parallel with the first controlled current source, said second controlled current source comprising a second variable voltage source,
- a control unit (3) of the first controlled current source and of the second controlled current source, the control unit (3) being arranged to distribute the rectifier current ($I$) into a first current ($I_1$) flowing in the first controlled current source and into a second current ($I_2$) flowing in the second controlled current source, arranged to shape the rectifier current ($I$) and to regulate the voltage ($V_{e1}$, $V_{e2}$) on the terminals of the first variable voltage source and the voltage on the terminals of the second variable voltage source, and **in that**:
- the control unit comprises means for determining a control voltage to be applied to each controlled current source k, the control voltage ($v_k$) being determined on the basis of the following relation:

$$v_k = u_k V_{ek} = u_k^* V_{ek}^* + PI\left( I^* V_{ek} - V_{ek}^* \sum_{k=1}^{n} I_k \right)$$

where:

- $u_k$ represents the control duty cycle for the controlled current source $k$,
- $V_{ek}$ represents the voltage on the terminals of the capacitor of the controlled current source $k$,
- $I^*$ represents the reference of the rectifier current,
- $u_k^*$ represents the duty cycle reference for the controlled current source $k$,
- $V_{ek}^*$ represents the voltage reference on the terminals of the capacitor of the controlled current source $k$,
- $PI$ represents an integral proportional-action regulator,
- n represents the number of current sources connected in parallel,
- Ik represents the current in the current source k.

2. Converter according to Claim 1, **characterised in that** the first controlled current source and the second controlled current source are identical to one another.

3. Converter according to Claim 1 or 2, **characterised in that** the first controlled current source comprises a first inductor ($L_1$) connected in series with the first variable voltage source.

4. Converter according to Claim 3, **characterised in that** the second controlled current source comprises a second inductor ($L_2$) connected in series with the second variable voltage source.

5. Power converter according to Claim 4, **characterised in that** the first inductor ($L_1$) and the second inductor ($L_2$) are coupled to a same magnetic core.

6. Converter according to Claim 4, **characterised in that** the first variable voltage source and the second variable voltage source each comprise an electronic converter (1, 2) comprising a first switching leg, a second switching leg and a capacitor ($C_{e1}$, $C_{e2}$) connected in parallel, each switching leg comprising at least one electronic switch ($T1_1$, $T1_2$, $T2_1$, $T2_2$).

Fig. 1

EP 2 595 291 B1

**Fig. 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **ERTL H et al.** *A constant Output Current Three Phase Diode Bridge Rectifyer Employing a Novel Electronic Smoothing Inductor,* 01 Avril 2005, vol. 52 (2), ISSN 0278-0046, 454-461
- **SALMON J et al.** *Improving the Opération of 3-Phase Diode Rectifiers using an asymmetrical half-bridge DC-link active filter,* 08 Octobre 2000, ISBN 978-0-7803-6402-8, 2115-2122
- New topology of electronic smoothing inductor used in three phase electric drives. **COSMIN GALEA et al.** ELECTRICAL POWER QUALITY AND UTILISATION (EPQU). IEEE, 2011, 1-6
- Ultra compact three phase rectifier with electronic smoothing inductor. **MINO K et al.** APPLIED POWER ELECTRONICS CONFERENCE AND EXPOSITION, 2005. APEC 2005. TWENTIETH ANNUAL IEEE AUSTIN, TX, USA 6-10 MARCH 2005. IEEE, 06 Mars 2005, vol. 1, 522-528
- Loop gain measurement of paralleled dc-dc converters with average-current-sharing control. **YURI PANOVOV et al.** APPLIED POWER ELECTRONICS CONFERENCE AND EXPOSITION, 2008. APEC 2008. TWENTY-THIRD ANNUAL IEEE. IEEE, 24 Février 2008, 1048-1053